# EUROPÄISCHE PATENTSCHRIFT

(11) **EP 2 154 343 B1**
(45) Veröffentlichungstag und Bekanntmachung des Hinweises auf die Patenterteilung: **06.07.2016**
(21) Anmeldenummer: 09009708.0
(22) Anmeldetag: 28.07.2009
(51) Int. Cl.: F01N 3/022

(54) **Partikelabscheider, insbesondere Partikelfilter, zur Abscheidung von Partikeln aus dem Abgasstrom einer Brennkraftmaschine**
Particulate separator, in particular particulate filter for separating particulates from an exhaust gas flow of a combustion engine
Séparateur de particules, notamment filtre à particules, pour la séparation de particules du flux de gaz d'échappement d'un moteur à combustion interne

(30) Priorität: 12.08.2008 DE 102008038736
(43) Veröffentlichungstag der Anmeldung: 17.02.2010
(73) Patentinhaber: MAN Truck & Bus AG, 80995 München (DE)
(72) Erfinder: Döring, Andreas, 82008 München (DE)

(56) Entgegenhaltungen:
- EP-A- 0 277 012
- CH-A5- 680 788
- DE-A1- 19 704 147
- FR-A- 2 856 108
- FR-A- 2 907 158
- JP-A- 11 210 440
- US-A1- 2006 191 248

## Beschreibung

Die Erfindung betrifft einen Partikelabscheider, insbesondere einen Partikelfilter, zur Abscheidung von Partikeln aus dem Abgasstrom einer Brennkraftmaschine, nach dem Oberbegriff des Anspruchs 1.

Unter einem Partikelabscheider werden im Sinne der vorliegenden Erfindung zum einen solche Partikelabscheider verstanden, deren Strömungskanaldurchmesser wesentlich größer ist als der Durchmesser der größten vorkommenden Abgaspartikel. Ebenso werden darunter auch üblicherweise als Partikelfilter bezeichnete Partikelabscheider verstanden, deren Strömungskanaldurchmesser im Bereich der Partikeldurchmesser eines Abgasstroms liegen und/oder bei denen das Abgas durch ein Filtermedium hindurchströmt. In Folge dieses Unterschiedes sind insbesondere die Partikelfilter verstopfungsgefährdet, was den Abgasgegendruck mit steigender abgeschiedener Rußmenge erhöht und die Motorleistung mindert. Eine bekannte Möglichkeit den Partikelfilter zu regenerieren, besteht darin, den dort abgeschiedenen kohlenstoffhaltigen Ruß zu oxidieren. Hierzu wird die Abgastemperatur aktiv auf über 550°C angehoben, wodurch eine Oxidation mit dem im Abgas enthaltenen Restsauerstoff möglich wird. Die Erhöhung der Abgastemperatur wird durch die Zugabe einer großen Menge Kohlenwasserstoffe ins Abgas erreicht, die an einem, dem Partikelfilter vorgeschalteten Katalysator oxidiert werden. Die Exothermie dieser Reaktion führt zu dem benötigten Temperaturanstieg, der am Eintritt des Filters zu einer Oxidation des dort abgeschiedenen Rußes gemäß der nachstehenden Gleichung führt:

C + O₂ → CO₂

Da auch diese Reaktion jedoch exotherm verläuft, heizt sich das Abgas weiter auf, so dass die Abgastemperatur in Richtung Filteraustritt stetig ansteigt. Da die Regeneration aktiv ausgelöst werden muss, spricht man in diesem Zusammenhang von einer aktiven Filterregeneration.

Eine weitere Möglichkeit zur Regeneration eines Partikelfilters ist aus der EP 0 341 832 A2 bekannt. Dort wird das im Abgas enthaltene Stickstoffmonoxid (NO) in einem stromauf eines Partikelfilters angeordneten Oxidationskatalysator mit Hilfe des ebenfalls enthaltenen Restsauerstoffs zu Stickstoffdioxid (NO₂) oxidiert. Dieses Stickstoffdioxid setzt sich wiederum im Partikelfilter mit den Kohlenstoffpartikeln zu CO, CO₂, N₂ und NO um. Hierbei handelt es sich um eine sogenannte passive Regeneration.

Um den Rußabbrand weiter zu verbessern, werden aktuell die Partikelfilter vermehrt mit einer katalytischen Beschichtung zur Oxidation von Stickstoffmonoxid versehen. Dabei handelt es sich meist um platinhaltige Katalysatoren. Der Nachteil besteht hierbei allerdings darin, dass das am Partikelfilter gebildete Stickstoffdioxid nur zur Oxidation von Partikeln dienen kann, die stromab der katalytisch aktiven Schicht zur Stickstoffmonoxid-Oxidation abgeschieden wurden, also innerhalb des Filtermediums. Bildet sich dagegen auf der Filteroberfläche und damit auf der katalytisch aktiven Schicht eine Schicht aus abgeschiedenen Partikeln, ein sogenannter Filterkuchen, aus, so liegt der Stickstoffmonoxid-Oxidationskatalysator stromab des Filterkuchens, so dass die dort abgeschiedenen Rußpartikel nicht mit Hilfe von Stickstoffdioxid aus dem auf dem Partikelfilter aufgebrachten Stickstoffmonoxid-Oxidationskatalysator oxidiert werden können. Aus diesen Gründen kann trotz der katalytischen Beschichtung des Partikelfilters nicht auf einen Stickstoffmonoxid-Oxidationskatalysator vor dem Partikelfilter verzichtet werden, so dass sich insgesamt ein relativ großes Bauvolumen ergibt.

Weiter ist es allgemein bekannt, zur Regeneration des Partikelfilters Additive, wie Eisen und/oder Cer, zu verwenden, die die Zündtemperaturen auf ca. 350°C absenken.

Allen beschriebenen Verfahren bzw. Systemen ist gemeinsam, dass, falls keine vollständige Oxidation des im Partikelfilter eingelagerten Kohlenstoffs gelingt, der Kohlenstoffanteil und damit der Abgasgegendruck stetig ansteigen. Wird eine kritische Masse erreicht, kann es bei hohen Abgastemperaturen zur unkontrollierten Zündung des Kohlenstoffs kommen, der dann schlagartig mit dem Sauerstoff verbrennt. Dies führt zu einem Temperaturanstieg auf bis zu 1200°C und damit meist zur Schädigung des Partikelfilters. Wie schon zuvor in Verbindung mit der aktiven Regeneration beschrieben, liegen die Maximaltemperaturen üblicherweise am Filteraustritt.

Die Schädigung kann durch die Verwendung von temperaturfesteren Materialien wie Siliziumcarbid oder Aluminiumtitanat anstelle des meist eingesetzten Cordierits weitestgehend vermieden werden. Allerdings sind diese hochtemperaturfesten Materialien nur schwer zu verarbeiten, sehr teuer und zudem auch schwerer als die herkömmlichen Materialien. Ein weiterer Nachteil dieser hochtemperaturfesten Materialien besteht darin, dass deren Wärmekapazität meist höher liegt als die von z. B. Cordierit. Dies führt dazu, dass Temperaturspitzen aufgrund der höheren Wärmespeicherkapazität gekappt werden. Dies ist speziell bei einer aktiven Filterregeneration kritisch, da mehr Wärme zugeführt werden muss, um trotz der Pufferung durch das Filtersubstrat mit hoher Wärmespeicherfähigkeit die Zündtemperaturen am Filtereintritt zu erreichen.

Aus der FR 2 856 108 A ist es bekannt einen Katalysatorschaden oder die Beschädigung eines in einem Auspuffrohr eines Verbrennungsmotors angeordneten Partikelfilters durch einen raschen Temperaturanstieg des Partikelfilters zu verhindern. Dazu wird durch Ausbilden eines tief verstopften Aufbaus am abgasausströmseitigen Ende des Partikelfilters für einen Wärme absorbierenden Bereich gesorgt. Da der Wärme absorbierende Bereich eine größere Wärmekapazität als die anderen Abschnitte hat, wird die Verbrennungswärme auch dann absorbiert und abgeleitet, wenn eine rasche Kettenreaktion der Teilchenmaterialverbrennung auftritt, wodurch ein Temperaturanstieg des stromabwärtigen Abschnitts des Partikelfilters, in dem das Risiko besteht, dass er eine hohe Temperatur annimmt, unterdrückt werden kann.

Ausgehend vom vorstehend beschriebenen Stand der Technik ist es daher Aufgabe der vorliegenden Erfindung, einen Partikelabscheider, insbesondere einen Partikelfilter, zu schaffen, der eine hohe thermische Stabilität aufweist, insbesondere dahingehend, dass mit diesem ein zu starkes Aufheizen des Abgasstroms und ein damit verbundenes unkontrolliertes Zünden eines in Strömungsrichtung des Abgasstroms im hinteren Bereich des Partikelabscheiders abgeschiedenen Rußes zuverlässig vermieden werden kann. Diese Aufgabe wird gelöst mit den Merkmalen des Anspruchs 1. Vorteilhafte Weiterbildungen sind Gegenstand der Unteransprüche.

Erfindungsgemäß weist der Partikelabscheider wenigstens entlang der Hauptströmungsrichtung eines Abgasstromes durch den Partikelabscheider hinsichtlich der Wärmeübertragungseigenschaften vom Abgasstrom auf den Partikelabscheider unterschiedliche Wärmeübertragungszonen auf, mittels denen jeweils eine genau definierte Wärmemenge vom Abgasstrom auf den jeweils zugeordneten Partikelabscheiderabschnitt übertragen werden kann. Gemäß einer bevorzugten Ausgestaltung sind die Wärmeübertragungszonen dabei so ausgebildet, dass der Wärmeübergangskoeffizient und/oder die Wärmespeicherfähigkeit in Strömungsrichtung ansteigt, wodurch die vom Abgasstrom auf den Partikelabscheider übertragene Wärmemenge in Hauptströmungsrichtung angehoben wird.

Dadurch steigt, insbesondere bei einer aktiven Regeneration des Partikelabscheiders, insbesondere eines Partikelfilters, die Temperatur in der Einströmzone des Partikelabscheiders rasch an, während dem Abgas bei der weiteren Durchströmung des Partikelabscheiders zunehmend Wärme entzogen und auf z. B. das Substrat des Partikelabscheiders übertragen wird. Dies verhindert ein zu starkes Aufheizen des Abgasstroms entlang der Hauptströmungsrichtung und ein damit verbundenes unkontrolliertes Zünden des im, in Strömungsrichtung des Abgasstromes gesehen hinteren Bereich des Partikelabscheiders abgeschiedenen Rußes.

Die Partikelabscheider sind bevorzugt mit einer Vielzahl von Strömungskanälen ausgestaltet. Im Falle der bevorzugten Ausgestaltung des Partikelabscheiders als Partikelfilter im Sinne der eingangs genannten Definition ist der Partikelfilter zudem bevorzugt als Oberflächenpartikelfilter oder als Tiefenfilter ausgebildet.

Die unterschiedlichen Wärmeübertragungszonen unterscheiden sich dabei wenigstens bereichsweise hinsichtlich der Wärmeleitung innerhalb des Partikelfilters und/oder der Wärmespeicherfähigkeit des Partikelfilters und/oder des Wärmeübergangs (Wärmeleitung, Konvektion, Wärmestrahlung) zwischen dem Partikelfilter und der Gasströmung. Beispielsweise lassen sich die Wärmespeicherfähigkeit und die Wärmeleitung durch eine entlang der Hauptströmungsrichtung veränderbare Porosität des Abscheidersubstrates variieren. Ebenso ist es denkbar, unterschiedliche Materialien mit unterschiedlichen Wärmekapazitäten entlang der Hauptströmungsrichtung zu verwenden. So lässt sich beispielsweise die Einströmzone keramischer Filtersubstrate in Cordierit und die Austrittszone in Aluminiumtitanat oder Siliziumcarbid ausführen, wodurch die Wärmekapazität und damit die Wärmespeicherfähigkeit in Richtung des Filteraustritts ansteigt. Hierbei handelt es sich nur um eine von mehreren Möglichkeiten, die lediglich zur besseren Verdeutlichung beispielhaft angegeben worden ist.

Die Wärmespeicherfähigkeit kann auch durch Erhöhen der Masse des z. B. Substrates eines Partikelabscheiders in einem bestimmten, vorgegebenen Bereich angehoben werden, um die gewünschten Wärmeübertragungszonen mit den unterschiedlichen Wärmespeicher- und gegebenenfalls unterschiedlichen Wärmeübertragungseigenschaften einzustellen. Besonders vorteilhaft gelingt das Anheben der Masse durch z. B. Erhöhen der Wandstärke eines Abscheidersubstrates entlang der Hauptströmungsrichtung. Eine weitere Möglichkeit zur Erhöhung der Wärmespeicherfähigkeit besteht bei wabenförmig aufgebauten Filtersubstraten darin, Zwischenwände auf der An- und/oder Abströmseite einzubringen. Dadurch vergrößert sich die Zelligkeit, mit ihr die Masse und somit die Wärmespeicherfähigkeit. Trotz der höheren Zelligkeit ist der Gegendruckanstieg einer solchen Konfiguration gering, da der Hauptgegendruck eines solchen Systems beim Durchströmen des Filtermaterials und der darin oder darauf abgeschiedenen Ruß- oder Aschepartikel und nicht auf der An- oder Abströmseite entsteht. Derartige Partikelfilter lassen sich recht einfach durch Extrusion von Cordierit, Aluminiumtitanat oder Siliziumcarbid herstellen, wobei abwechselnd Kanäle auf der Anström- und Abströmseite durch z. B. Pfropfen verschlossen werden können, um die Gasströmung durch die Filterwände zu drücken. Bei diesen keramischen Filtersubstraten als bevorzugter Ausgestaltung, gelingt die Herstellung des Filtersubstrats und der Zwischenwände in einem einzigen Arbeitsschritt, da durch die Auswahl eines geeigneten Mundstücks mit abwechselnd hohen und niedrigen Zelligkeiten parallele Kanäle mit unterschiedlichen Kanalquerschnitten einfachst hergestellt werden können. Dabei ist allerdings darauf zu achten, dass die sich dadurch ausbildenden Zwischenwände nicht über den gesamten Kanalquerschnitt, sondern nur über den hinteren Bereich des Partikelfiltersubstrats erstrecken und/oder die Dicke der Zwischenwände zum Austritt des Partikelfilters hin ansteigt. Anschließend werden dann, wir bereits oben dargestellt, die Kanäle am Gasein- oder Gasaustritt verschlossen, um einen Gasdurchtritt durch das Filtersubstrat zu erzielen.

Besonders bevorzugt ist ein Partikelabscheider, der eine Vielzahl von im Wesentlichen parallel zueinander verlaufenden Strömungskanälen aufweist. Die Strömungskanäle selbst können einen in sich und/oder untereinander stets gleichen oder wenigstens in Teilbereichen unterschiedlichen Strömungskanalquerschnitt aufweisen.

Gemäß einer bevorzugten Ausgestaltung bildet somit ein erster Teil der Strömungskanäle eine den Rohabgasstrom aufnehmende Rohabgasseite und ein zweiter Teil der Strömungskanäle, die von den rohabgasseitigen Strömungskanälen durch einen gaspermeablen und Partikel vorgegebener Größenordnung zurückhaltenden Strömungskanalwandbereich abgetrennt sind, eine den Reingasstrom auslassende Reingasseite aus. Die Strömungskanäle sind dabei zur Ausbildung von rohabgasseitigen und von reinabgasseitigen Taschen oder Sacklöchern wechselseitig mit vorgegebenem Muster, bezogen auf die Hauptströmungsrichtung, auf der Anströmseite und auf der Ausströmseite mit separat oder integral ausgebildeten Verschlusselementen verschlossen.

In wenigstens einem Teil der Strömungskanäle ist wenigstens ein sich über eine vorgegebene Teilstrecke der Hauptströmungsrichtung erstreckendes und eine vorgegebene Form aufweisendes Einbauelement angeordnet, das eine Wärmeübertragungszone mit einer gegenüber wenigstens einer in Hauptströmungsrichtung angrenzenden Wärmeübertragungszone unterschiedlichen Wärmeübertragungs- und/oder Wärmespeichereigenschaften ausbildet. Das Einbauelement kann grundsätzlich jede gewünschte Form aufweisen, z. B. als Zwischenwand oder als Kühlrippe ausgebildet sein. Auch kugelige, noppenartige, stiftartige oder schaufelartige Formgebungen sind möglich. Die Einbauelemente können dabei aus demselben Material oder aber auch aus einem anderen Material als der eigentliche Partikelabscheider ausgebildet sein. So bieten sich neben den keramischen Werkstoffen auch Metallfolien, Sintermetallplatten oder Streckmetallfolien zur Herstellung des Partikelfilters an.

Mittels dieser Materialien kann durch geeignetes Umformen eine größere Oberfläche auf der sowohl Gaseintritts- als auch auf der Gasaustrittsseite des Partikelfilters hergestellt werden, ohne dass hierfür separate zusätzliche Einbauten notwendig sind. Sollten dennoch separate Einbauten zur Vergrößerung der Oberfläche derartig gestalteter Einbauelemente erforderlich sein, z. B. Spiralen, Abstandshalter, Stege oder ähnliches, können diese durch einfaches Löten, Schweißen, Kraftschluss oder Formschluss an den metallischen Folien oder Platten fixiert werden.

Mit den Einbauelementen können die Wärmeübertragungseigenschaften zwischen einem Abgasstrom und dem Partikelabscheider entlang der vorgegebenen Richtung auf einfache und funktionssichere Weise so verändert werden, dass dadurch die gewünschten unterschiedlichen Wärmeübertragungszonen ausgebildet werden können. Neben der Vergrößerung der geometrischen Oberfläche kann mit derartigen Einbauelementen zudem die Turbulenz erhöht werden, was ebenfalls zu einem verbesserten Wärmeübergang führt. Der Partikelabscheider kann thermisch noch unempfindlicher ausgelegt werden, wenn derartige Einbauelemente nicht nur auf der Rohgasseite, sondern auch auf der Reingasseite vorgesehen werden, so dass die dem z. B. Substrat des Partikelabscheiders auf der Rohgasseite zugeführte Wärmemenge auf der Reingasseite wieder über den gereinigten Abgasstrom abgeführt werden kann.

Weiterhin ist es möglich, den Wärmeübergang und/oder die Wärmespeicherfähigkeit des insbesondere Partikelfilters vom Eintritt in das Substrat entlang der Hauptströmungrichtung anfangs anzuheben und anschließend in Richtung des Austritts aus dem Substrat wieder abzusenken. Dies führt dazu, dass das Maximum des Wärmeübergangs und/oder der Wärmespeicherfähigkeit zwischen dem Ein- und Austritt liegt, wobei sich als vorteilhaft erwiesen hat, das Maximum in einen Bereich zwischen der Mitte und 90% der Substratlänge, vom Eintritt aus gesehen, anzuordnen. Dadurch wird zum einen sichergestellt, dass dem Abgasstrom stromauf des Austritts Wärme entzogen wird, und zum anderen, dass in Richtung Austritt nicht zuviel Wärme auf das Filtersubstrat übertragen wird, was zu einer thermischen Schädigung führen würde. Bevorzugt ist der Partikelabscheider als Partikelfilter mit einem keramischen Filtersubstrat ausgebildet. Selbstverständlich können die erfindungsgemäßen Maßnahmen aber auch in Verbindung mit metallischen Partikelabscheidern oder solchen Filtern bzw. Abscheidern verwendet werden, die aus keramischen und/oder glas- und/oder silikat- und/oder quarzhaltigen Fasern bestehen.

Um den Bauraum des gesamten Abgasnachbehandlungssystems gering zu halten, ist es sinnvoll, den Partikelabscheider mit katalytisch aktivem Material zu beschichten, um separate Katalysatoren zu vermeiden oder diese zumindest kleiner ausführen zu können. Dabei kann es sich um Dieseloxidations- und/oder SCR- und/oder NO-Oxidations- und/oder 3-Wege- und/oder NOₓ-Speicher- und/oder NH₃-Oxidations- und/oder Harnstoffzersetzungskatalysatoren handeln.

Um den Abgasgegendruck niedrig zu halten, wird die Menge des auf den Partikelabscheider aufgebrachten Katalysators gering gehalten. So beträgt beispielsweise die aufgebrachte Masse typischerweise weniger als 50% der Masse der z. B. Filterwände eines Partikelfilters. Diese Masse kann allerdings erhöht werden, wenn die Porosität des Washcoates auf bevorzugt über 53% angehoben wird.

Um das Bauvolumen eines Partikelabscheiders gering zu halten, wird der Katalysator vorwiegend in den gasdurchlässigen Bereichen eines bevorzugt Partikelfilters als Partikelabscheider und auf den Einbauelementen zur Verbesserung des Wärmeübergangs und/oder der Wärmespeicherfähigkeit aufgebracht.

Als Aktivmaterial für den Oxidationskatalysator zur Überführung von Stickstoffmonoxid in Stickstoffdioxid sind Platin und/oder Platinoxid und/oder Zeolithe geeignet. Das gleiche gilt für einen NH₃-Oxidationskatalysator.

Als Aktivkomponenten für die SCR-Katalysatoren kommen Vanadium und/oder V₂O₅ und/oder WO₃ und/oder WO₃/TiO₂ und/oder Eisen-Zeolithe und/oder Cobalt-Zeolithe und/oder Kupfer-Zeolithe in Frage.

Für den NOₓ-Speicherkatalysator werden als Aktivkomponenten Platin und/oder Palladium und/oder Rhodium und/oder Barium und/oder Kalzium eingesetzt. Für den 3-Wege-Katalysator werden bevorzugt Platin und/oder Palladium und/oder Rhodium als Aktivkomponenten verwendet.

Als katalytisch aktive Substanzen für die Harnstoffzersetzung sind wieder TiO₂ und Zeolithe bevorzugt.

Eine weitere Möglichkeit besteht darin, den Partikelabscheider selbst, insbesondere den Partikelfilter, und die Einbauelemente mit unterschiedlichen Katalysatoren und/oder unterschiedlichen Katalysatorbeladungen zu versehen. Da die Temperaturen an der mit rußbeladenen Filterwand durch die Rußoxidation höher liegen als an den Einbauelementen, insbesondere dann, wenn sie auf der Abströmseite angebracht sind, ist es sinnvoll, den z. B. Partikelfilter mit einem thermisch stabileren Katalysator zu versehen als die Einbauelemente.

Die Erfindung wird nachfolgend anhand einer Zeichnung näher erläutert.

Es zeigen:
- Fig. 1: einen schematischen Längsquerschnitt durch einen Partikelfilter mit Zwischenwänden auf der Rohgasseite zur Anhebung der Wärmespeicherfähigkeit in Richtung des Filteraustritts,
- Fig. 2: schematisch einen Querschnitt entlang der Linie A-A der Fig. 1 mitsamt hier katalytisch beschichteten Zwischenwänden,
- Fig. 3: schematisch einen Längsquerschnitt durch einen erfindungsgemäßen Partikelfilter mit Kühlrippen zur Ableitung der Wärmemenge von der Rohgasseite auf die Reingasseite, und
- Fig. 4: schematisch einen Partikelfilter, der in ein Schalldämpfergehäuse integriert ist.

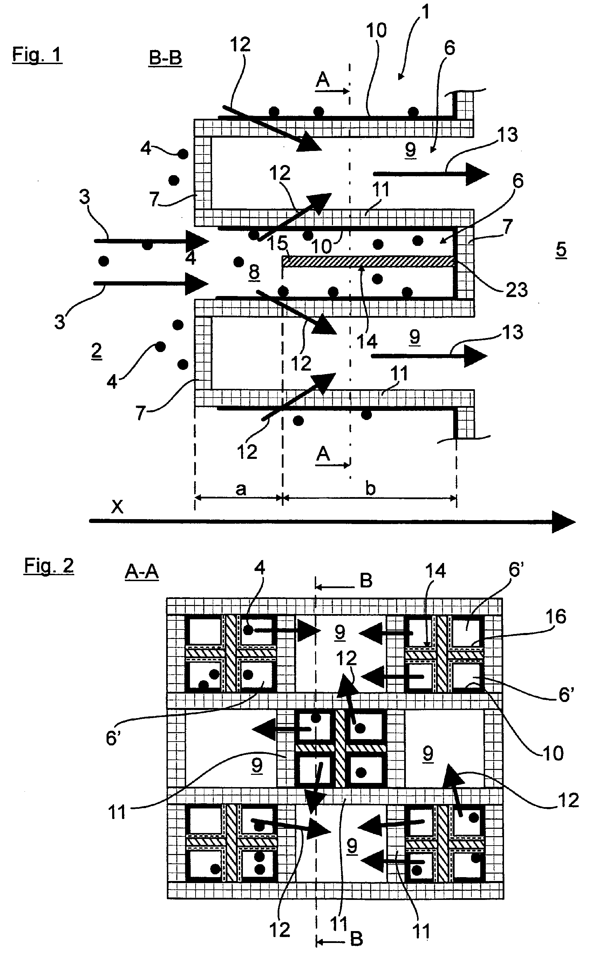

In der Fig. 1 ist schematisch ein Längsquerschnitt durch einen erfindungsgemäßen Partikelfilter 1 gezeigt, der ein Querschnitt entlang der Linie B-B der Fig. 2 ist. Die Fig. 2 zeigt damit einen Querschnitt entlang der Linie A-A der Fig. 1.

Dieser Partikelfilter 1 wird auf einer Anströmseite 2 von einem Rohabgasstrom 3 angeströmt, der eine Vielzahl von abzuscheidenden Rußpartikeln 4 mit sich führt.

Der Partikelfilter 1 weist eine Mehrzahl von unmittelbar nebeneinanderliegenden, parallelen Strömungskanälen 6 auf, die hier lediglich beispielhaft wechselseitig einmal von der Anströmseite 2 und dann von der in Hauptströmungsrichtung x gegenüberliegenden Abströmseite 5 her mit einer z. B. integralen Stirnwand 7 verschlossen sind, so dass die einzelnen Strömungskanäle 6 wechselweise zur Anströmseite 2 hin offene, erste sacklochartige oder taschenförmige Kammern 8 und zur Abströmseite 5 hin offene, zweite sacklochartige oder taschenförmige Kammern 9 ausbilden. Als Filtermaterial für den Partikelfilter 1 können Cordierit, Aluminiumtitanat oder Siliziumcarbid, aber auch Sintermetall oder keramische Fasern sowie Silikatfasern oder Metallgestricke eingesetzt werden.

Wie in der Fig. 1 gut erkennbar ist, trifft der mit Rußpartikeln 4 beladene Rohabgasstrom 3 auf die Anströmseite 2 des Partikelfilters 1 und lagert die Rußpartikel 4 insbesondere in den ersten sacklochartigen oder taschenförmigen Kammern 8 als sogenannten Filterkuchen 10 an, bevor das so von den Rußpartikeln 4 gereinigte Abgas 12 durch die gaspermeablen Kammerwände hindurch in die zweiten sacklochartigen oder taschenförmigen Kammern 9 einströmt und aus diesen als Reingas 13 ausströmt.

Wie dies weiter aus der Zusammenschau der Figuren 1 und 2 deutlich ersichtlich ist, ist in den ersten Kammern 8 jeweils ein Einbauelement 14 angeordnet, das abströmseitig mit der Stirnwand 7 verbunden ist und mit einem freien Ende 15 einen vorgegebenen Abstand a von dem anströmseitigen Partikelfilterende aufweist. Das Einbauelement 14 ist hier, wie in der Fig. 2 lediglich schematisch dargestellt, durch eine Kreuzform aufweisende Zwischenwände gebildet, die die erste Kammer 8 somit entlang der Erstreckungsrichtung des Einbauelementes 14, in Hauptströmungsrichtung x gesehen, wiederum in vier einzelne Strömungskanäle 6' unterteilen. Offensichtlich wird durch das Einbringen eines derartigen Einbauelementes 14 in den hinteren Bereich der ersten Kammer 8 die Oberfläche in diesem Bereich vervielfacht, hier im gewählten Beispiel nahezu vervierfacht. Dadurch bildet sich entlang der in Hauptströmungsrichtung x gesehenen Erstreckungslänge b des Einbauelementes 14 eine Wärmeübertragungszone mit einem deutlich höheren Wärmeübergang vom Abgasstrom zum Partikelfilter 1 und einer höheren Wärmespeicherfähigkeit aus, als dies in der zur Anströmseite hin liegenden Wärmeübertragungszone der Fall ist, die sich vom freien Ende 15 des Einbauelementes 14 aus entlang der Wegstrecke a erstreckt. D. h., dass somit durch das Einbauelement 14 in den ersten Kammern 8 jeweils hier beispielhaft zwei in Hauptströmungsrichtung x des Abgasstroms gesehen unterschiedliche Wärmeübertragungszonen ausgebildet werden, wobei die Wärmespeicherfähigkeit dieser Wärmeübertragungszonen in der durch die Wegstrecke a charakterisierten Wärmeübertragungszone geringer ist als in der durch die Wegstrecke b charakterisierten Wärmeübertragungszone. In diesem Beispielfall wird somit ein Partikelfilter 1 zur Verfügung gestellt, dessen Wärmespeicherfähigkeit in Hauptströmungsrichtung x gesehen ebenso angehoben wird, wie der Wärmeübergang zwischen Partikelfilter 1 und dem Gasstrom.

Beim Durchströmen der rohgasseitigen ersten Kammer 8 wird somit dem Rohabgasstrom 3 im in Hauptströmungsrichtung x gesehen hinteren Bereich der ersten Kammer 8 Wärme durch das Einbauelement 14 entzogen. Wird dem Partikelfilter 1 z. B. ein Katalysator zur Oxidation von Stickmonoxid vorgeschaltet, wird das so gebildete NO₂ zusammen mit dem Abgas 12 durch den auf den Kammerwänden 11 abgeschiedenen Filterkuchen 10 gedrückt. Das im Abgas angereicherte NO₂ bewirkt im Kontakt mit dem Filterkuchen 10 eine Umsetzung der Rußpartikel 4 zu CO, CO₂, N₂ und NO, wobei diese Reaktionen kontinuierlich ablaufen, so dass der Filterkuchen 10 auf einer im Wesentlichen konstanten Dicke und der durch diesen verursachte Abgasgegendruck auf einem im Wesentlichen konstanten Niveau gehalten werden kann.

Alternativ zu der kontinuierlichen, eben beschriebenen passiven Regenerierung des Partikelfilters 1 in Verbindung mit einem diesem vorgeschalteten Katalysator zur Oxidation von NO, besteht auch die Möglichkeit, den Partikelfilter 1 zyklisch und damit aktiv zu regenerieren. Dazu wird in, an sich bekannter Weise, durch die Zugabe und Oxidation von Kohlenwasserstoffen die Temperatur im Rohabgasstrom 3 so weit erhöht, dass eine Oxidation der Rußpartikel 4 mit Hilfe von Sauerstoff gelingt. Besonders hier zeigen sich dann die erfindungsgemäßen Vorteile: Die Abgastemperatur kann im Eintrittsbereich des Rohabgasstroms 3, d. h. anströmseitig, rasch angehoben werden, um eine Oxidation der kohlenstoffhaltigen Rußpartikel 4 einzuleiten. Durch die stromab eingebrachten Einbauelemente 14 werden dann die durch die exotherme Rußoxidation entstehenden Temperaturspitzen abgepuffert und so ein Anstieg der Abgastemperatur auf ein solches Niveau, das zu einer thermischen Schädigung des Partikelfilters 1 führen würde, verhindert.

Weiterhin ist es möglich, den Wärmeübergang und/oder die Wärmespeicherfähigkeit des insbesondere Partikelfilters nicht zum Austritt des in Substrats, sondern zu seiner Mitte hin ansteigen zu lassen. Dadurch wird zum einen sichergestellt, dass dem Abgasstrom Wärme entzogen wird, und zum anderen, dass in Richtung Austritt nicht zuviel Wärme auf das Filtersubstrat übertragen wird, was zu einer thermischen Schädigung führen würde. Dies kann im vorliegenden Fall durch Entfernen der Zwischenwände 14 im Austritts- und Eintrittbereich des Partikelfilters erfolgen, ist aus Gründen der Übersicht allerdings in Fig. 1 nicht dargestellt.

Durch die Temperaturabsenkung mittels der Einbauelemente 14 wird es sogar möglich, thermisch empfindliche Katalysatoren, wie z. B. NOₓ-Speicherkatalysatoren, SCR-Katalysatoren, NO-Oxidationskatalysatoren, NH₃-Oxidationskatalysatoren, 3-Wege-Katalysatoren und/oder Harnstoffzersetzungskatalysatoren auf dem Partikelfilter 1 aufzubringen, ohne dass diese durch zu hohe Temperaturen geschädigt werden. Je nach Funktion können die Katalysatoren dabei anström- und/oder abströmseitig auf und/oder im gesamten Filterbereich wenigstens bereichsweise aufgebracht werden.

Die im Fall der zuletzt geschilderten Regeneration des Partikelfilters 1 gegebene lokale Temperaturerhöhung an der Anströmseite 2 des Partikelfilters 1 kann zusätzlich durch geeignete Materialwahl und somit durch die Wärmespeicherkapazität des Filtermaterials relativ gut von der Abströmseite 5 ferngehalten werden. Daher ist es sinnvoll, thermisch besonders instabile Katalysatortypen, wie V₂O₅-basierte SCR-Katalysatoren und/oder eisenhaltige, kupferhaltige oder cobalthaltige Zeolithe mehr in Richtung zur Abströmseite 5 hin, d.h. abströmseitig, anzubringen.

Aus Gründen der thermischen Stabilität kann es weiter vorteilhaft sein, wenn die Beladung des Partikelfilters 1 mit katalytisch aktivem Material in Hauptströmungsrichtung x des Abgases abnimmt und/oder in Strömungsrichtung durch das Filtermedium, insbesondere die Filterwand, zunimmt. Dadurch werden die Stellen höchster Russbeladung und damit höchster Exothermie im unkontrollierten Regenerationsfall, die sich im Endbereich und auf der Rohgasseite der Filterwand befinden, örtlich von den katalytisch aktiven Beschichtungen getrennt. Dies lässt sich entweder dadurch erreichen, dass der Partikelfilter 1 selbst in Schichten aufgebaut ist, wobei die Beladung der Schicht mit katalytisch aktivem Material in Hauptströmungsrichtung x des Abgases absinkt, oder dadurch, dass die Beladung mit dem katalytisch aktiven Material durch Beschichten oder Imprägnieren der Abströmseite 5 des Partikelfilters so vorgenommen wird, dass der Grad der Beladung des Filtermaterials mit steigender Eindringtiefe der Beschichtungs- oder Imprägnierlösung von der Reingas- in Richtung Rohgasseite abnimmt. Um die sacklochartige Struktur des Partikelfilters 1 zu erzeugen, kann entweder eine Vielzahl röhrenförmiger Gebilde zu einer dichten Packung zusammengefasst werden, wobei jeweils benachbarte Strömungskanäle 6, oder Röhren, wie zuvor beschrieben, wechselseitig entweder auf der Anströmseite 2 oder auf der Abströmseite 5 verschlossen werden. Das Verschließen kann, wie zuvor beschrieben, mit dem gleichen Material erfolgen, das auch für den Partikelfilter 1 verwendet wird. Das Material kann aber auch unterschiedlich sein.

Die einseitige Beladung des Partikelfilters 1 mit Katalysatormaterial kann bei den vorstehend angesprochenen Strukturen dadurch erfolgen, dass zunächst nur jede zweite Öffnung auf der Abströmseite 5 verschlossen wird und so dann der Filterkörper des Partikelfilters 1 in eine Beschichtungs- oder Imprägnierlösung getaucht wird, wodurch die Beschichtungs- oder Imprägnierlösung in den zur Abströmseite 5 hin offenen Strömungskanälen 6 aufsteigt. Die überschüssige Beschichtungs- oder Imprägnierlösung wird nach erfolgter Beschichtung oder Imprägnierung wieder ausgeblasen und die beschichteten oder imprägnierten Kanäle werden so dann zur Anströmseite 2 hin verschlossen.

Eine Möglichkeit, die sacklochartigen bzw. taschenförmigen Kammerstrukturen zu erzeugen, besteht darin, Packungen von zueinander beabstandeten Platten anzufertigen, wobei die durch die Beabstandung entstandenen benachbarten Freiräume jeweils wechselseitig auf der Anströmseite 2 und der Abströmseite 5 verschlossen sind, so dass sich eine taschenförmige Struktur ausbildet. Die gezielte Beladung der Anströmseite 2 bzw. der Abströmseite 5 mit Katalysatormaterial kann dadurch erfolgen, dass die für den Aufbau der Struktur verwendeten Platten einseitig mit Katalysatormaterial beladen sind und die Platten so geschichtet werden, dass sich wechselseitig zwei beladene Plattenseiten und zwei nicht beladene Plattenseiten gegenüberstehen. Die Beladung der Platten kann dabei so erfolgen, dass die Platten in Schichten aufgebaut sind, wobei der Grad der Beladung der Schichten mit Katalysatormaterial variiert wird. Es besteht aber auch die Möglichkeit, die Beladung der Platten mit Katalysatormaterial durch Besprühen oder Bestreichen mit katalytisch aktiven Beschichtungs- oder Imprägnierlösungen zu realisieren.

Zur Verbesserung der Abspaltung von Ammoniak aus einem Reduktionsmittel, z. B. aus einer wässrigen Harnstofflösung, zum Betrieb eines nachgeschalteten SCR-Katalysators ist es vorteilhaft, einen die Abspaltung begünstigenden Katalysator vorzusehen, um die Bildung von Cyanursäure zu verhindern. Die Bildung von Cyanursäure ist deshalb problematisch, weil es dadurch zu einer Verblockung des Partikelfilters 1 und damit nicht nur zum Ausfall des Abgasnachbehandlungssystems, sondern der gesamten Brennkraftmaschine kommen kann. Erzeugt werden kann der Katalysator zur Verbesserung der Abspaltung von Ammoniak aus dem Reduktionsmittel dadurch, dass die Anströmseite 2 des Partikelfilters 1 mit einem die Abspaltung begünstigenden Katalysator beladen bzw. beschichtet ist. Dafür in Frage kommende Materialien sind TiO₂ oder TiO₂/SiO₂ oder TiO₂/SiO₂/Al₂O₃ sowie Zeolithe. Die Erzeugung einer entsprechenden Beladung erfolgt analog zu den oben beschriebenen Vorgehensweisen.

Wie dies insbesondere aus der Fig. 2 ersichtlich ist, ergibt sich durch die Einbauelemente 14 in Form einer kreuzförmigen Zwischenwand nicht nur eine erhebliche Verbesserung des Wärmeübergangs bzw. mehr Masse zur Wärmespeicherung in diesem hinteren Kammerbereich der ersten Kammer 8, sondern bietet sich das Einbauelement 14 aufgrund der dort vorhandenen großen geometrischen Oberfläche auch für eine katalytische Beschichtung 16 an, wobei die katalytische Beschichtung auch lediglich bloß in Teilbereichen des bzw. der Einbauelemente 14 vorgesehen sein kann.

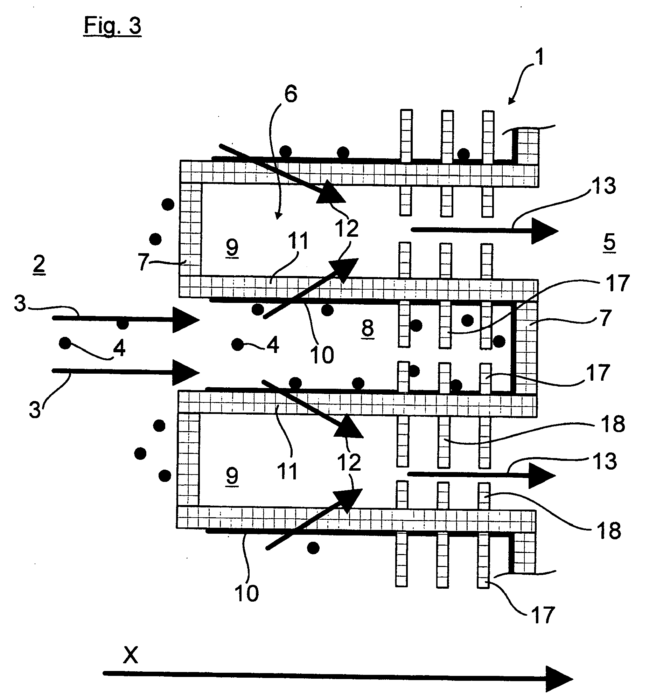

Durch die in der Fig. 3 dargestellte Verwendung von Kühlrippen 17, 18 kann der Wärmeübergang nochmals verbessert werden. Zur Ausgestaltung der Ausführungsform nach Fig. 1 gleiche Teile werden hierbei mit gleichen Bezugszeichen bezeichnet und nicht mehr näher beschrieben, sondern stattdessen auf die dazugehörige Beschreibung zur Fig. 1 verwiesen. Die Kühlrippen 17 und 18 sind hier zum einen rohabgasseitig in den ersten Kammern 8 (Kühlrippen 17) bzw. reinabgasseitig in den zweiten Kammern 9 (Kühlrippen 18) auf dem Filtermedium aufgebracht und ermöglichen die Ableitung hoher Temperaturen auf die rußfreie Reinseite der zweiten Kammer 9, wodurch ein unkontrolliertes Zünden des kohlenstoffhaltigen Rußes auf der Rohabgasseite in den ersten Kammern 8 zuverlässig vermieden werden kann.

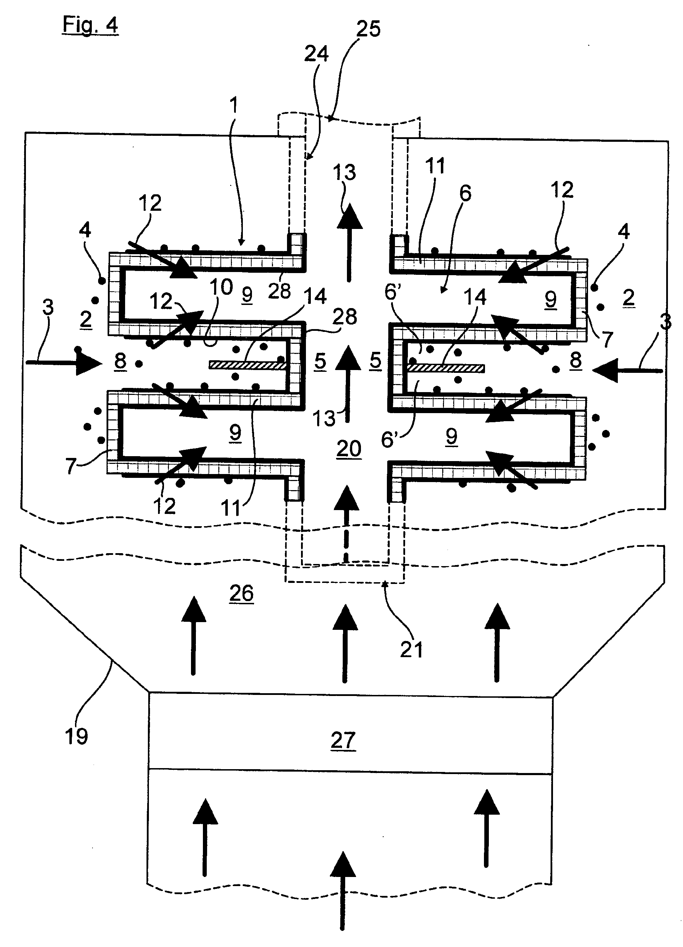

In der Fig. 4 ist schließlich eine besonders bevorzugte Anordnung eines im wesentlichen analog zur Fig. 1 gestalteten Partikelfilters 1 in einem Schalldämpfergehäuse 19 gezeigt. Der Partikelfilter 1 weist im hier betrachteten Querschnitt gegenüberliegende Bereiche auf, die in etwa ziehharmonikaförmig zueinander angeordnet bzw. ausgerichtet sind, so dass sich zwischen den beiden Reingasseiten der Partikelfilter 1 ein Reingas-Innenraum 20 ausbildet, der an seinem einen Ende 21, das zur Einströmseite 22 des Schalldämpfergehäuses 19 hin liegt, verschlossen ist, während das dem Ende 21 in Richtung zur Ausströmseite 23 des Schalldämpfergehäuses hin liegende Ende 24 des Reingas-Innenraums 20 offen ausgebildet ist und an eine Abströmöffnung 25 des Schalldämpfergehäuses 19 anschließt. Insgesamt weist der Partikelfilter 1 hier somit eine den Reingas-Innenraum 20 ringförmig umgebende Kontur auf.

Der Innenraum des Schalldämpfergehäuses 19 wird somit durch den ziehharmonikaförmig ausgebildeten Partikelfilter 1 in den bereits erwähnten Reingas-Innenraum 20 und den zwischen der Wandung des Schalldämpfergehäuses 19 und dem Partikelfilter 1 liegenden Außenraum 26 aufgeteilt. Im Bereich der Einströmseite 22 des Schalldämpfergehäuses 19 ist hier beispielhaft ferner ein Oxidationskatalysator 27 angeordnet, der Teile des im Abgasstrom enthaltenen Stickstoffmonoxids in Stickstoffdioxid überführt und/oder der dem Abgasstrom stromauf des Oxidationskatalysators 27 zu vorgegebenen Zeiten in vorgegebener Menge zudosierte Kohlenwasserstoffe zur Anhebung der Abgastemperatur oxidiert. Zusätzlich oder wahlweise kann ein Oxidationskatalysator auch außerhalb des Schalldämpfergehäuses angeordnet sein.

Ansonsten entspricht die Funktionsweise und der Aufbau des Partikelfilters 1 vom Prinzip her demjenigen, wie er in Verbindung mit der Ausführungsform der Fig. 1 explizit beschrieben worden ist, so dass zur Vermeidung von unnötigen Wiederholungen auf die diesbezüglichen Ausführungen verwiesen wird.

## Patentansprüche

1. Partikelabscheider, insbesondere Partikelfilter, zur Abscheidung von Partikeln aus dem Abgasstrom einer Brennkraftmaschine, wobei der Partikelabscheider (1) wenigstens entlang der Hauptströmungsrichtung (x) eines Abgasstromes (3, 12, 13) durch den Partikelabscheider (1) hinsichtlich dessen Wärmespeicherfähigkeit und/oder dessen Wärmeleitfähigkeit und/oder der Wärmeübertragungseigenschaften vom Abgasstrom (3, 12, 13) auf den Partikelabscheider (1) unterschiedliche Wärmeübertragungszonen (a, b) aufweist, mittels denen jeweils eine definierte Wärmemenge vom Abgasstrom (3, 12, 13) auf den jeweils zugeordneten Partikelabscheiderabschnitt übertragbar ist, wobei der Partikelabscheider (1) eine Vielzahl von Strömungskanälen (6) aufweist, wobei ein erster Teil der Strömungskanäle (6) eine den Rohabgasstrom (3) aufnehmende Rohabgasseite und ein zweiter Teil der Strömungskanäle (6), die von den rohabgasseitigen Strömungskanälen durch einen gaspermeablen und Partikel vorgegebener Größenordnung zurückhaltenden Strömungskanalwandbereich (11) abgetrennt sind, eine den Reingasstrom (13) auslassende Reingasseite ausbildet, wobei die Strömungskanäle (6) zur Ausbildung von rohabgasseitigen und von reinabgasseitigen Kammern (8, 9) wechselseitig mit vorgegebenem Muster auf der Anströmseite (2) und auf der Abströmseite (5) mit separat oder integral ausgebildeten Verschlusselementen (7) verschlossen sind, und wobei Einbauelemente (14; 17, 18) im Bereich der Strömungskanäle (6) der Rohgasseite angeordnet sind, **dadurch gekennzeichnet, dass** in wenigstens einem Teil der Strömungskanäle (6) der Rohgasseite wenigstens ein sich über eine vorgegebene Teilstrecke der Hauptströmungsrichtung (x) erstreckendes und eine vorgegebene Form aufweisendes Einbauelement (14; 17, 18) angeordnet ist, das eine Wärmeübertragungszone (b) mit einer gegenüber wenigstens einer in Hauptströmungsrichtung (x) angrenzenden Wärmeübertragungszone (a) unterschiedlichen Wärmeübertragungseigenschaft ausbildet, und dass der Partikelabscheider (1) und/oder wenigstens ein Teil der Einbauelemente (14) wenigstens in Teilbereichen mit einer, wenigstens einen Katalysator ausbildenden katalytisch aktiven Schicht (28) beschichtet ist, wobei die Zusammensetzung der katalytisch aktiven Schicht (16; 28) entlang der Hauptströmungsrichtung (x) in vorgegebenen Bereichen unterschiedlich ist, dergestalt, dass die Beladung und/oder Dicke der katalytisch aktiven Schicht (16; 28) entlang der Hauptströmungsrichtung (x) abnimmt und/oder in Strömungsrichtung von der Rohgasseite des Filtermediums auf die Reingasseite des Filtermediums zunimmt.

2. Partikelabscheider nach Anspruch 1, **dadurch gekennzeichnet, dass** die Wärmeübertragungszonen (a, b) so ausgebildet sind, dass die vom Abgasstrom (3, 12, 13) auf den Partikelabscheider (1) übertragbare Wärmemenge in Hauptströmungsrichtung (x) bis zum Austritt ansteigt.

3. Partikelabscheider nach Anspruch 1, **dadurch gekennzeichnet, dass** die Wärmeübertragungszonen (a, b) so ausgebildet sind, dass das Maximum der, vom Abgasstrom (3, 12, 13) auf die Wärmeübertragungszonen des Partikelabscheiders (1) übertragenen Wärmemenge in Hauptströmungsrichtung (x) zwischen 50% und 90% der Länge des Partikelabscheiders liegt und anschließend zum Austritt hin wieder abfällt.

4. Partikelabscheider nach einem der Ansprüche 1 bis 3, **dadurch gekennzeichnet, dass** sich die unterschiedlichen Wärmeübertragungszonen (a, b) wenigstens bereichsweise hinsichtlich der Porosität des Substrates und/oder des Materials und/oder der Substratmasse, insbesondere der Substratmaterialstärke, unterscheiden.

5. Partikelabscheider nach einem der vorhergehenden Ansprüche, **dadurch gekennzeichnet, dass** die Kammern (8, 9) mit Pfropfen oder Stirnwänden verschlossen sind.

6. Partikelabscheider nach einem der vorhergehenden Ansprüche, **dadurch gekennzeichnet, dass** das wenigstens eine Einbauelement (14; 17, 18) eine zwischenwandartige und/oder kühlrippenartige und/oder kugelige und/oder noppenartige und/oder stiftartige und/oder schaufelartige Form aufweist.

7. Partikelabscheider nach einem der vorhergehenden Ansprüche, **dadurch gekennzeichnet, dass** die Strömungskanäle (6) einen in sich und/oder untereinander stets gleichen oder wenigstens in Teilbereichen unterschiedlichen Strömungskanalquerschnitt aufweisen.

8. Partikelabscheider nach einem der Ansprüche 7 bis 9, **dadurch gekennzeichnet, dass** Einbauelemente (18) im Bereich der Strömungskanäle (6) der Reingasseite angeordnet sind, und/oder dass die Einbauelemente (14; 17, 18) aus dem gleichen Material wie der Partikelabscheider (11) hergestellt und mit diesem materialeinheitlich verbunden sind oder dass die Einbauelemente (14; 17, 18) aus einem anderen Material wie der Partikelabscheider (11) bestehen.

9. Partikelabscheider nach einem der vorhergehenden Ansprüche, **dadurch gekennzeichnet, dass** der Partikelabscheider (1) auf der Anströmseite (2) mit einem Katalysatormaterial beschichtet oder imprägniert ist, das die Abspaltung des Ammoniak aus einem Reduktionsmittel zur selektiven katalytischen Reduktion (SCR) begünstigt, wobei bevorzugt vorgesehen ist, dass das Katalysatormaterial, das die Abspaltung des Ammoniaks aus dem Reduktionsmittel begünstigt, als Aktivkomponente TiO₂ und/oder TiO₂/SiO₂ und/oder TiO₂/SiO₂/Al₂O₃ und/oder Zeolithe enthält.

10. Partikelabscheider nach einem der vorhergehenden Ansprüche, **dadurch gekennzeichnet, dass** der Partikelabscheider (1) zusätzlich auf der bezogen auf die Hauptströmungsrichtung (x) Abströmseite (5) am Ende der Beladung mit einem SCR-aktivem Katalysatormaterial mit einem Katalysatormaterial beschichtet oder imprägniert ist, das im Abgas vorhandenen überschüssigen Ammoniak oxidiert, wobei bevorzugt vorgesehen ist, dass das Katalysatormaterial zur Oxidation von überschüssigem Ammoniak Elemente der Platingruppe und/oder deren Oxide und/oder Zeolithe enthält.

11. Partikelabscheider nach einem der vorhergehenden Ansprüche, **dadurch gekennzeichnet, dass** der Partikelabscheider (1) und/oder die Einbauelemente aus Cordierit und/oder Aluminiumtitanat und/oder Siliziumcarbid und/oder Metall und/oder Metallfolie und/oder Sintermetall und/oder Glas und/oder Silikat bestehen, und/oder dass der Partikelabscheider (1) und die Einbauelemente durch Löten und/oder Schweißen und/oder Formschluss und/oder Kraftschluss verbunden und/oder stoffeinheitlich ausgeführt sind.

12. Schalldämpfergehäuse mit wenigstens einem Partikelabscheider nach einem der vorhergehenden Ansprüche, **dadurch gekennzeichnet, dass** der Partikelabscheider (1) in einem Schalldämpfergehäuse (19) untergebracht ist und dieses Schalldämpfergehäuse (19) in einen rohgasseitigen Außenraum (26) und in einen reingasseitigen Innenraum (20) unterteilt, aus dem das Reingas über eine Abströmöffnung (25) abströmt.

13. Schalldämpfergehäuse nach Anspruch 12, **dadurch gekennzeichnet, dass** dem Schalldämpfergehäuse (19) ein Oxidationskatalysator vorgeschalten und/oder im Schalldämpfergehäuse (19) ein Oxidationskatalysator (27) stromauf des Partikelabscheiders angebracht ist.

## Claims

1. A particle separator, in particular particle filter, for the separation of particles out of the exhaust-gas flow of an internal combustion engine, wherein the particle separator (1) has, at least along the main flow direction (x) of an exhaust-gas flow (3, 12, 13) through the particle separator (1), heat transfer zones (a, b) which differ with regard to the heat storage capacity thereof and/or the heat conductivity thereof and/or with regard to the heat transfer characteristics from exhaust-gas flow (3, 12, 13) to the particle separator (1), by means of which heat transfer zones in each case a defined amount of heat can be transferred from the exhaust-gas flow (3, 12, 13) to the respectively associated particle separator section, wherein the particle separator (1) has a multiplicity of flow ducts (6), wherein a first part of the flow ducts (6) forms an untreated-exhaust-gas side, which receives the untreated exhaust-gas flow (3), and a second part of the flow ducts (6), which are separated from the untreated-exhaust-gas-side flow ducts by a gas-permeable flow duct wall region (11) which retains particles of a predefined size range, forms a clean-gas side which discharges the clean-gas flow (13), wherein the flow ducts (6) are, for the purposes of forming untreated-exhaust-gas-side and clean-gas-side chambers (8, 9), closed off in alternating fashion in a predefined pattern on the inflow side (2) and on the outflow side (5) by way of separately or integrally formed closure elements (7), and wherein insert elements (14; 17, 18) are arranged in the region of the flow ducts (6) of the untreated-gas side, **characterized in that,** in at least a part of the flow ducts (6) of the untreated-gas side, there is arranged at least one insert element (14; 17, 18) which extends over a predefined partial length in the main flow direction (x) and which has a predefined shape and which forms a heat transfer zone (b) with a heat transfer characteristic which differs from that of at least one heat transfer zone (a) situated adjacently in the main flow direction (x), and **in that** the particle separator (1) and/or at least a part of the insert elements (14) is coated, at least in subregions, with a catalytically active layer (28) which forms at least one catalyst, wherein the composition of the catalytically active layer (16; 28) varies along the main flow direction (x) in predefined regions, in such a way that the loading and/or thickness of the catalytically active layer (16; 28) decreases along the main flow direction (x) and/or increases in the flow direction from the untreated-gas side of the filter medium to the clean-gas side of the filter medium.

2. The particle separator according to Claim 1, **characterized in that** the heat transfer zones (a, b) are formed such that the amount of heat that can be transferred from the exhaust-gas flow (3, 12, 13) to the particle separator (1) increases in the main flow direction (x) as far as the outlet.

3. The particle separator according to Claim 1, **characterized in that** the heat transfer zones (a, b) are formed such that the maximum of the amount of heat transferred from the exhaust-gas flow (3, 12, 13) to the heat transfer zones of the particle separator (1) lies, in the main flow direction (x), between 50% and 90% of the length of the particle separator, and subsequently decreases again towards the outlet.

4. The particle separator according to one of Claims 1 to 3, **characterized in that** the different heat transfer zones (a, b) differ at least regionally with regard to the porosity of the substrate and/or of the material and/or of the substrate mass, in particular with regard to the substrate material thickness.

5. The particle separator according to one of the preceding claims, **characterized in that** the chambers (8, 9) are closed off by way of plugs or end walls.

6. The particle separator according to one of the preceding claims, **characterized in that** the at least one insert element (14; 17, 18) is formed in the manner of an intermediate wall and/or in the manner of a cooling fin and/or is of spherical and /or stud-like and/or pin-like and/or vane-like form.

7. The particle separator according to one of the preceding claims, **characterized in that** the flow ducts (6) have a flow duct cross section which, in itself and/or relative to other flow duct cross sections, is constantly uniform or varies at least in subregions.

8. Particle separator according to one of Claims 7 to 9, **characterized in that** insert elements (18) are arranged in the region of the flow ducts (6) of the clean-gas side, and/or **in that** the insert elements (14; 17, 18) are produced from the same material as the particle separator (11) and are connected materially integrally thereto, or **in that** the insert elements (14; 17, 18) are composed of a different material than the particle separator (11).

9. The particle separator according to one of the preceding claims, **characterized in that** the particle separator (1) is coated or impregnated, on the inflow side (2), with a catalyst material which promotes the splitting of ammonia from a reducing agent for selective catalytic reduction (SCR), wherein it is preferably provided that the catalyst material that promotes the splitting of the ammonia from the reducing agent comprises, as active component, TiO₂ and/or TiO₂/SiO₂ and/or TiO₂/SiO₂/Al₂O₃ and/or zeolites.

10. The particle separator according to one of the preceding claims, **characterized in that** the particle separator (1) is additionally coated or impregnated, on the outflow side (5) in relation to the main flow direction (x), at the end of the loading with an SCR-active catalyst material, with a catalyst material which oxidizes the excess ammonia present in the exhaust gas, wherein it is preferably provided that the catalyst material for the oxidation of excess ammonia comprises elements from the platinum group and/or the oxides thereof and/or zeolites.

11. The particle separator according to one of the preceding claims, **characterized in that** the particle separator (1) and/or the insert elements are composed of cordierite and/or aluminium titanate and/or silicon carbide and/or metal and/or metal foil and/or sintered metal and/or glass and/or silicate, and/or **in that** the particle separator (1) and the insert elements are connected by brazing and/or welding and/or by positive locking and/or by non-positive locking and/or are formed materially integrally.

12. A silencer housing having at least one particle separator according to one of the preceding claims, **characterized in that** the particle separator (1) is accommodated in a silencer housing (19), and said silencer housing (19) is divided into an untreated-gas-side outer chamber (26) and a clean-gas-side inner chamber (20), from which the clean gas flows out via an outflow opening (25).

13. The silencer housing according to Claim 12, **characterized in that** an oxidation catalyst is positioned upstream of the silencer housing (19), and/or an oxidation catalyst (27) is applied in the silencer housing (19) upstream of the particle separator.

## Revendications

1. Séparateur de particules, en particulier filtre à particules, pour séparer des particules du courant de gaz d'échappement d'un moteur à combustion interne, le séparateur de particules (1) comprenant, au moins le long de la direction d'écoulement principal (x) d'un courant de gaz d'échappement (3, 12, 13) à travers le séparateur de particules (1), des zones de transfert de chaleur (a, b), différentes pour ce qui est de sa capacité calorifique et/ou de sa conductibilité thermique et/ou des propriétés de transfert de chaleur, du courant du gaz d'échappement (3, 12, 13) au séparateur de particules (1), zones à l'aide de chacune desquelles une quantité de chaleur définie peut être transférée du courant de gaz d'échappement (3, 12, 13) au segment de séparateur de particules qui lui est affecté, le séparateur de particules (1) comprenant un grand nombre de canaux d'écoulement (6), une première partie des canaux d'écoulement (6) formant un côté gaz d'échappement brut recevant le courant du gaz d'échappement brut (3), et une deuxième partie des canaux d'écoulement (6), qui sont séparés des canaux d'écoulement côté gaz d'échappement brut par une zone (11) de paroi de canal d'écoulement, perméable aux gaz et retenant les particules ayant un ordre de grandeur prédéfini, formant un côté gaz propre par lequel passe le courant de gaz propre (13), les canaux d'écoulement (6) étant, pour former des chambres (8, 9) côté gaz d'échappement brut et côté gaz d'échappement propre, alternativement obturés avec un modèle prédéfini sur le côté arrivée (2) et sur le côté évacuation (5), avec des éléments d'obturation (7), configurés séparément ou solidairement, et des éléments internes (14 ; 17, 18) étant disposés dans la zone des canaux d'écoulement (6) du côté gaz brut, **caractérisé en ce que**, dans au moins une partie des canaux d'écoulement (6) du côté gaz brut, au moins un élément interne (14 ; 17, 18) est disposé, qui s'étend sur un tronçon partiel prédéfini de la direction d'écoulement principal (x) et présente une forme prédéfinie, élément interne qui réalise une zone de transfert de chaleur (b), présentant une propriété de transfert de chaleur différente de celle d'au moins une zone de transfert de chaleur (a) contiguë dans la direction de l'écoulement principal (x), et que le séparateur de particules (1) et/ou au moins une partie des éléments internes (14) sont, au moins dans des zones partielles, revêtus d'une couche catalytiquement active (28), formant au moins un catalyseur, la composition de la couche catalytiquement active (16 ; 28) étant différente dans des zones prédéfinies le long de la direction de l'écoulement principal (x) de telle sorte que la charge et/ou l'épaisseur de la couche catalytiquement active (16 ; 28) diminue le long de la direction de l'écoulement principal (x), et/ou augmente dans la direction d'écoulement allant du côté gaz brut du milieu filtrant au côté gaz propre du milieu filtrant.

2. Séparateur de particules selon la revendication 1, **caractérisé en ce que** les zones de transfert de chaleur (a, b) sont conçues de telle sorte que la quantité de chaleur pouvant être transférée du courant de gaz d'échappement (3, 12, 13) au séparateur de particules (1) augmente dans la direction de l'écoulement principal (x) jusqu'à la sortie.

3. Séparateur de particules selon la revendication 1, **caractérisé en ce que** les zones de transfert de chaleur (a, b) sont conçues de telle sorte que le maximum de la quantité de chaleur transférée du courant de gaz d'échappement (3, 12, 13) aux zones de transfert de chaleur du séparateur de particules (1) soit, dans la direction de l'écoulement principal (x), compris entre 50 % et 90 % de la longueur du séparateur de particules, et diminue de nouveau ensuite jusqu'à la sortie.

4. Séparateur de particules selon l'une des revendications 1 à 3, **caractérisé en ce que** les différentes zones de transfert de chaleur (a, b) diffèrent au moins par zones pour ce qui est de la porosité du substrat et/ou du matériau et/ou de la masse du substrat, en particulier de l'épaisseur du matériau du substrat.

5. Séparateur de particules selon l'une des revendications précédentes, **caractérisé en ce que** les chambres (8, 9) sont obturées par des bouchons ou des parois avant.

6. Séparateur de particules selon l'une des revendications précédentes, **caractérisé en ce que** le ou les éléments internes (14 ; 17, 18) présentent une forme de type paroi intermédiaire et/ou de type nervure de refroidissement et/ou sphérique et/ou de type téton et/ou de type tige et/ou pale.

7. Séparateur de particules selon l'une des revendications précédentes, **caractérisé en ce que** les canaux d'écoulement (6) présentent des sections transversales de canal d'écoulement toujours égales, dans un canal et/ou entre plusieurs canaux, ou diffèrent au moins dans des zones partielles.

8. Séparateur de particules selon l'une des revendications 7 à 9, **caractérisé en ce que** des éléments internes (18) sont disposés dans la zone des canaux d'écoulement (6) du côté gaz propre, et/ou que les éléments internes (14 ; 17, 18) sont fabriqués en le même matériau que le séparateur de particules (11) et sont assemblés à ce dernier avec uniformité de matière, ou que les éléments internes (14 ; 17, 18) sont constitués d'un matériau différent de celui du séparateur de particules (11).

9. Séparateur de particules selon l'une des revendications précédentes, **caractérisé en ce que** le séparateur de particules (1) est, sur le côté entrée (2), revêtu ou imprégné d'un matériau catalyseur, qui favorise la dissociation de l'ammoniac à partir d'un réducteur pour assurer une réduction catalytique sélective (SCR), auquel cas il est de préférence prévu que le matériau catalyseur qui favorise la dissociation de l'ammoniac à partir du réducteur contienne en tant que composant actif du TiO₂ et/ou du TiO₂/SiO₂ et/ou du TiO₂/SiO₂/Al₂O₃ et/ou des zéolites.

10. Séparateur de particules selon l'une des revendications précédentes, **caractérisé en ce que** le séparateur de particules (1) est en outre, sur le côté sortie (5) rapporté à la direction de l'écoulement principal (x), à la fin du chargement du matériau catalyseur à activité SCR, revêtu ou imprégné d'un matériau catalyseur, qui oxyde l'ammoniac en excès présent dans le gaz d'échappement, auquel cas on prévoit de préférence que le matériau catalyseur contienne, pour l'oxydation de l'ammoniac en excès, des éléments du groupe du platine et/ou des oxydes de ceux-ci et/ou des zéolites.

11. Séparateur de particules selon l'une des revendications précédentes, **caractérisé en ce que** le séparateur de particules (1) et/ou les éléments internes sont constitués de cordiérite et/ou de titanate d'aluminium et/ou de carbure de silicium et/ou d'un métal et/ou d'une feuille métallique et/ou d'un métal fritté et/ou de verre et/ou de silicate, et/ou que le séparateur de particules (1) et les éléments internes sont assemblés par brasage et/ou soudage et/ou par liaison avec correspondance de forme et/ou par liaison dynamique, et/ou sont réalisés avec une uniformité de matière.

12. Carter de silencieux comportant au moins un séparateur de particules selon l'une des revendications précédentes, **caractérisé en ce que** le séparateur de particules (1) est disposé dans un carter de silencieux (19), et que ce carter de silencieux (19) est subdivisé en un espace extérieur (26) côté gaz brut et un espace intérieur (20) côté gaz propre, par lequel le gaz propre s'évacue par l'intermédiaire d'une ouverture de sortie (25).

13. Carter de silencieux selon la revendication 12, **caractérisé en ce qu'**un catalyseur d'oxydation est monté en amont du carter de silencieux (19), et/ou qu'un catalyseur d'oxydation (27) est disposé dans le carter de silencieux (19) en amont du séparateur de particules.
